# EUROPEAN PATENT SPECIFICATION

(11) **EP 3 180 367 B1**
(45) Date of publication and mention of the grant of the patent: **18.04.2018**
(21) Application number: 15756378.4
(22) Date of filing: 13.08.2015
(51) Int. Cl.: C08F 2/00, C08F 2/12, C08F 2/18

(54) **MULTI-REACTOR SLURRY POLYMERIZATION PROCESSES WITH HIGH ETHYLENE PURITY**
MULTIREAKTORAUFSCHLÄMMUNGSPOLYMERISATIONSVERFAHREN MIT HOCHREINEM ETHYLEN
PROCÉDÉS DE POLYMÉRISATION EN SUSPENSION À RÉACTEURS MULTIPLES AVEC UNE PURETÉ ÉLEVÉE EN ÉTHYLÈNE

(30) Priority: 14.08.2014 EP 14180976
(43) Date of publication of application: 21.06.2017
(73) Proprietor: Basell Polyolefine GmbH, 50389 Wesseling (DE)
(72) Inventor: MEIER, Gerhardus, 60320 Frankfurt (DE); DAMM, Elke, 61118 Bad Vilbel (DE); KUEHL, Reinhard, 53332 Bornheim (DE); CARVAJAL, Rodrigo, 53175 Bonn (DE); PYMAN, Phil, 65812 Bad Soden (DE)
(74) Representative: Seelert, Stefan
(86) International application number: PCT/EP2015/068633
(87) International publication number: WO 2016/023973

(56) References cited:
- WO-A2-2013/154907
- US-A1- 2007 293 638

## Description

### FIELD OF THE INVENTION

The present disclosure relates to a process for ethylene polymerization. More particularly, the present disclosure relates to a multi-reactor slurry polymerization process using high purity ethylene to produce multimodal polyethylene.

### BACKGROUND OF THE INVENTION

The use of polyethylene-containing products is known. Various processes can be used to produce polyethylene. In ethylene slurry polymerization processes, diluents such as hexane are used to dissolve the ethylene monomer, comonomers and hydrogen, and the monomer(s) are polymerized with a catalyst. Following polymerization, the polymer product formed is present as a slurry suspended in the liquid medium. In typical multi-reactor cascade processes, shown e.g., in WO 2012/028591 A1, US 6,204,345 B1, and WO 2005/077992 A1, monomer(s), hydrogen, catalyst and diluent are fed into the first of three reactors where a slurry forms from the polymer particles contained within the diluent and unreacted monomer. The reactors can be operated in parallel or in series, and the types/amounts of monomer and conditions can be varied in each reactor to produce a variety of polyethylene materials, including unimodal (molecular weight distribution) or multimodal polyethylene material. Such multimodal compositions are used in a variety of applications; e.g., WO 2012/069400 A1 discloses trimodal polyethylene compositions for blow moldings.

Ziegler type catalysts have been used in ethylene polymerization processes. They use aluminum alkyl compounds as co-catalyst activators to activate titanium or vanadium sites on the catalyst. The amount of co-catalyst present in the reactor thus plays an important part in determining the yields and selectivities of the ethylene slurry polymerization process, particularly in multi-reactor systems where different polymers can be produced in each reactor, but the same co-catalyst flows to each reactor in turn.

It is known that various compounds, such as oxygen-containing polar molecules can poison Ziegler type catalysts, degrading their yields and selectivities, as described for example in WO 95/07941 A1, WO 96/39450 A1, WO 2004/085488 A2, and EP 0 206 794 A1. This can occur, e.g., when the poisons interact with either the TiCl₄ or the MgCl₂ support of the catalyst. These compounds can be contained as impurities in various feeds to the polymerization such as in the monomer(s), in the diluent, or in other feed streams. Pretreating ethylene in single-reactor ethylene polymerization processes has been attempted to reduce the effect of poisons and to improve the catalyst yield and the plant availability.

Further, it is known to use aluminum alkyls such as triethylaluminum, trimethylaluminum, tri-isobutylaluminum and tri-n-hexylaluminum as scavengers of poisons in polymerization solutions, as described in WO 2004/085488 A2. However, these aluminum alkyl materials are also co-catalysts for the catalyzed polymerization, as described above, so that the process of scavenging catalyst poisons changes the availability of the aluminum alkyl co-catalyst for ethylene polymerization. This results in altered reactor yields and product properties. Even more demanding is the situation where multiple slurry reactors are operated in series, where active catalyst within the polyethylene product flows from reactor to reactor, and ethylene is fed to each reactor. Variations in the amounts of available aluminum alkyl in the individual polymerization reactors may result in changes in the properties of the final polyethylene compositions, however fluctuations in the impurity levels of the feed streams might complicate adjustments. Therefore, a continuing need exists for multi-reactor ethylene slurry polymerization processes in the production of multimodal polyethylenes to minimize the adverse effects of catalyst poisons on reactor yields and selectivities and to ensure that polyethylenes of constant structure and composition are produced in each of the polymerization reactor in order to reliably obtain multimodal polyethylenes with the targeted final polymer properties.

### SUMMARY OF THE INVENTION

The present disclosure provides multi-reactor slurry polymerization processes for the preparation of polyethylene in a reactor cascade of two or more polymerization reactors.

The present disclosure provides a slurry polymerization process for the preparation of polyethylene in a reactor cascade of two or more polymerization reactors comprising the steps of:
a) feeding to a polymerization reactor amounts of ethylene, of a Ziegler catalyst, of fresh aluminum alkyl and of a diluent and optionally amounts of hydrogen and optionally amounts of one or more C₃ to C₁₀ alpha-olefins;
b) contacting in the polymerization reactor at a reactor temperature from 60°C to 95°C and a reactor pressure from 0.15 MPa to 3 MPa, the amounts of the ethylene, the Ziegler catalyst, the fresh aluminum alkyl, the diluent and optionally the hydrogen and the C₃ to C₁₀ alpha-olefins, thereby forming a slurry product comprising particulate polyethylene and a suspension medium;
c) withdrawing the slurry product from the polymerization reactor;
d) feeding the slurry product to a second polymerization reactor of the reactor cascade,
e) feeding to the second polymerization reactor additional amounts of ethylene, of diluent and optionally additional amounts of hydrogen and of C₃ to C₁₀ alpha-olefins;
f) contacting in the second polymerization reactor at a reactor temperature from 60°C to 95°C and a reactor pressure from 0.15 MPa to 3 MPa the slurry product fed to the second polymerization reactor and the additional amounts of ethylene, diluent, and optionally hydrogen and C₃ to C₁₀ alpha-olefins, thereby forming an additional amount of polyethylene in the slurry product;
g) and withdrawing the slurry product from the second polymerization reactor,
wherein the ethylene is first passed through an ethylene purification unit, which reduces at least the concentration of carbon monoxide, carbon dioxide, oxygen, acetylene and water contained in the ethylene, before it is fed to the two or more polymerization reactors of the reactor cascade.

In some embodiments, the process further comprising the steps of:
h) feeding the slurry product withdrawn from the second polymerization reactor to a third polymerization reactor of the reactor cascade,
i) feeding to the third polymerization reactor additional amounts of ethylene, of diluent, and optionally additional amounts of hydrogen and of C₃ to C₁₀ alpha-olefins;
j) contacting in the third polymerization reactor at a reactor temperature from 60°C to 95°C and a reactor pressure from 0.15 MPa to 3 MPa, the slurry product fed to the third polymerization reactor and the additional amounts of ethylene, diluent, and optionally hydrogen and C₃ to C₁₀ alpha-olefins, thereby forming an additional amount of polyethylene in the slurry product;
k) and withdrawing the slurry product from the third polymerization reactor.

In some embodiments, the process further comprising the steps of:
1) feeding the slurry product withdrawn in step g) or k) to a post reactor,
m) maintaining the slurry product in the post reactor at a reactor temperature from 60°C to 95°C and a reactor pressure from 0.15 MPa to 3 MPa, thereby forming an additional amount of polyethylene in the slurry product;
n) and withdrawing the slurry product from the post reactor.

In some embodiments, the ethylene fed to the polymerization reactors has a carbon monoxide concentration of at most 0.09 ppm by volume.

In some embodiments, the ethylene fed to the polymerization reactors has a carbon dioxide concentration of at most 0.9 ppm by volume.

In some embodiments, the ethylene fed to the polymerization reactors has an oxygen concentration of at most 0.9 ppm by volume.

In some embodiments, the ethylene fed to the polymerization reactors has an acetylene concentration of at most 2.7 ppm by volume.

In some embodiments, the ethylene fed to the polymerization reactors has a water concentration of at most 1.8 ppm by volume.

In some embodiments, the ethylene purification comprises a first process step comprising contacting the ethylene with a catalyst reducing the concentration of oxygen in the ethylene, a second process step comprising contacting the ethylene with a catalyst reducing the concentration of carbon monoxide in the ethylene, a third process step comprising contacting the ethylene with a molecular sieves and a fourth process step comprising contacting the ethylene with an activated alumina.

In some embodiments, one or more C₃ to C₁₀ alpha-olefins are fed to at least one of the polymerization rectors and the C₃ to C₁₀ alpha-olefins are first passed through an olefin purification unit, which reduces at least the concentration of carbon monoxide, carbon dioxide, oxygen, acetylene and water contained in the olefins, before being fed to the two or more polymerization reactors of the reactor cascade.

In some embodiments, the aluminum alkyl is trimethylaluminum, triethylaluminum, tri-isobutylaluminum, isoprenylaluminum, or tri-n-hexylaluminum.

In some embodiments, the diluent fed to the first reactor of the reactor cascade is fresh diluent.

In some embodiments, the prepared polyethylene has a density in the range of from 0.935 g/cm³ to 0.970 g/cm³.

In some embodiments, the prepared polyethylene is a bimodal or multimodal polyethylene.

In some embodiments, the present disclosure provides process for preparing films, pipes or small blow molding or large blow molding polyethylene articles, in which a polyethylene is prepared by the process of the present disclosure and the polyethylene is then converted to a film, pipe or small blow molding or large blow molding polyethylene article.

### BRIEF DESCRIPTION OF THE DRAWINGS

To assist those of ordinary skill in the relevant art in making and using the subject matter hereof, reference is made to the appended drawings, wherein:

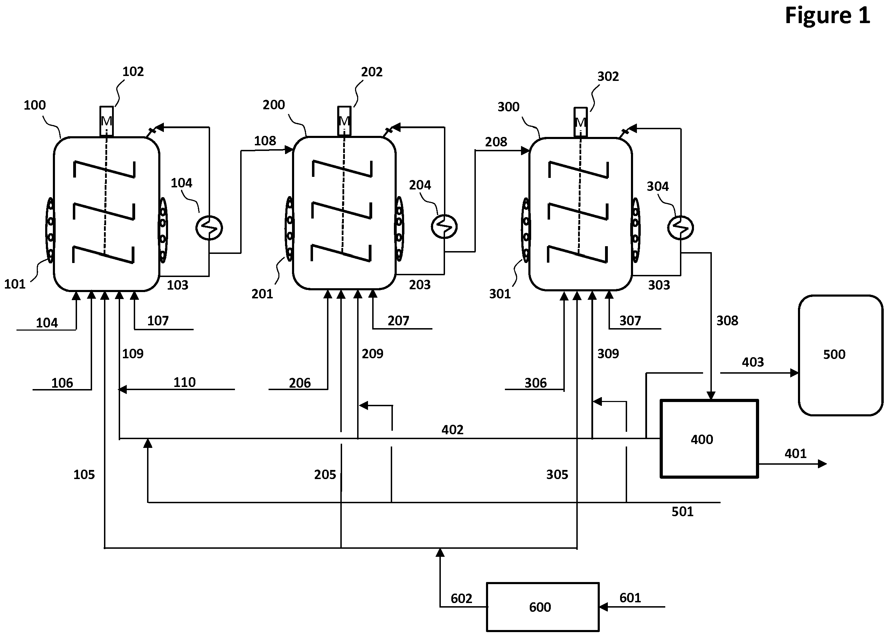

Figure 1 depicts a flow diagram illustrating a multi-reactor ethylene slurry cascade polymerization process for producing multimodal polyethylene.

### DETAILED DESCRIPTION OF THE INVENTION

The process of the present disclosure relates to a slurry polymerization process for the preparation of polyethylene in a reactor cascade of one first polymerization reactor and one or more subsequent polymerization reactors comprising feeding to the first polymerization reactor amounts of ethylene, of a Ziegler catalyst, of aluminum alkyl and of a diluent, and optionally amounts of hydrogen and optionally amounts of C₃ to C₁₀ alpha-olefins as comonomers and feeding to the one or more subsequent polymerization reactors amounts of ethylene, and a of diluent, and optionally amounts of hydrogen and optionally amounts of C₃ to C₁₀ alpha-olefins as comonomers. The catalyst fed to the first polymerization reactor of the cascaded multi-reactor system flows from the first polymerization reactor to the second polymerization reactor, and then to subsequent polymerization reactors within the respective reactor slurry products. The ethylene fed to the polymerization reactors is first passed through an ethylene purification unit, which reduces at least the concentration of carbon monoxide, carbon dioxide, oxygen, acetylene and water contained in in the ethylene, before it is fed to the two or more polymerization reactors of the reactor cascade.

The polyethylene slurry production process is carried out in a reactor cascade system, i.e. in reactors which are operated in series. Such a reactor cascade system can have two, three or more polymerization reactors. Most preferably, the process is carried out in a three-reactor cascade process operated in series.

Thus, the subject matter of the present disclosure relates to a slurry polymerization process for the preparation of polyethylene comprising:
a) feeding to a first polymerization reactor of a reactor cascade amounts of ethylene, of a Ziegler catalyst, of fresh aluminum alkyl and of a diluent, and optionally amounts of hydrogen and optionally amounts of one or more C₃ to C₁₀ alpha-olefins;
b) contacting in the first polymerization reactor at a reactor temperature from 60°C to 95°C, preferably from 65°C to 90°C, and more preferably from 70°C to 85°C, and a reactor pressure from 0.15 MPa to 3 MPa, preferably from 0.2 MPa to 2 MPa, more preferably from 0.25 MPa to 1.5 MPa, the amounts of the ethylene, the Ziegler catalyst, the fresh aluminum alkyl, the diluent and optionally the hydrogen and the C₃ to C₁₀ alpha-olefins, thereby forming a slurry product comprising particulate polyethylene and a suspension medium;
c) withdrawing the slurry product from the first polymerization reactor;
d) feeding the slurry product to the second polymerization reactor of the reactor cascade,
e) feeding to the second polymerization reactor additional amounts of ethylene, of diluent, and optionally additional amounts of hydrogen and of C₃ to C₁₀ alpha-olefins;
f) contacting in the second polymerization reactor at a reactor temperature from 60°C to 95°C, preferably from 65°C to 90°C, and more preferably from 70°C to 85°C, and a reactor pressure from 0.15 MPa to 3 MPa, preferably from 0.2 MPa to 2 MPa, more preferably from 0.25 MPa to 1.5 MPa, the slurry product fed to the second polymerization reactor and the additional amounts of ethylene, diluent, and optionally hydrogen and C₃ to C₁₀ alpha-olefins, thereby forming an additional amount of polyethylene in the slurry product;
g) and withdrawing the slurry product from the second polymerization reactor.

In a preferred embodiment, the polyethylene slurry production process further comprises:
h) feeding the slurry product withdrawn from the second polymerization reactor to a third polymerization reactor of the reactor cascade,
i) feeding to the third polymerization reactor additional amounts of ethylene, of diluent, and optionally additional amounts of hydrogen and of C₃ to C₁₀ alpha-olefins;
j) contacting in the third polymerization reactor at a reactor temperature from 60°C to 95°C, preferably from 65°C to 90°C, and more preferably from 70°C to 85°C, and a reactor pressure from 0.15 MPa to 3 MPa, preferably from 0.2 MPa to 2 MPa, more preferably from 0.25 MPa to 1.5 MPa, the slurry product fed to the third polymerization reactor and the additional amounts of ethylene, diluent, and optionally hydrogen and C₃ to C₁₀ alpha-olefins, thereby forming an additional amount of polyethylene in the slurry product;
k) and withdrawing the slurry product from the third polymerization reactor.

In one embodiment of the process of the present disclosure, the slurry product withdrawn from the second polymerization reactor, withdrawn from the third polymerization reactor, or, if a reactor cascade of more than three polymerization reactors is employed, withdrawn from the last polymerization reactor of the reactor cascade is further fed to a post reactor. The process then further comprises the steps of:
1) feeding the slurry product withdrawn in step g) or k) to a post reactor,
m) maintaining the slurry product in the post reactor at a reactor temperature from 60°C to 95°C, preferably from 65°C to 90°C, and more preferably from 70°C to 85°C, and a reactor pressure from 0.15 MPa to 3 MPa, preferably from 0.2 MPa to 2 MPa, more preferably from 0.25 MPa to 1.5 MPa, thereby forming an additional amount of polyethylene in the slurry product;
n) and withdrawing the slurry product from the post reactor.
The polymerization reaction occurring in the post reactor consumes remaining ethylene and, if present, comonomers, which have been transferred together with the slurry product from the previous polymerization reactor to the post reactor, and accordingly increases the yield of the multi-reactor slurry polymerization process.

The slurry product withdrawn from the last polymerization reactor of the reactor cascade is usually fed to a separator, which separates the particulate polyethylene from the suspension medium. At least a part of the suspension medium separated from the slurry product in the separator may be recycled as diluent to one or more polymerization reactors of the reactor cascade.

Reference is now made to Figure 1 which illustrates a preferred embodiment of the process of the present disclosure, as a three-reactor system running in series, i.e. as cascade. The polymerization is carried out in 3 polymerization reactors 100, 200 and 300. Each of the reactors has a cooling jacket 101, 201 or 301 and is equipped with a mixing unit 102, 202 or 302 comprising a motor, a rotating shaft and impellers.

Catalyst is fed to rector 100 via line 104. Further, ethylene is dosed via line 105 and optionally 1-butene is dosed as comonomer via line 106 and/or hydrogen is dosed via line 107. Reactor slurry is withdrawn form reactors 100 through line 103 and routed for external cooling through cooler 104 and then back to polymerization reactor 100. Reactor slurry withdrawn form reactor 100 via line 103 is further partly transferred through line 108, which may further comprise a flash vessel (not shown), to reactor 200.

The polyethylene particles contained in the slurry transferred to reactor 200 comprise still active catalyst which continues to polymerize ethylene and, if present, comonomer in reactor 200. Accordingly, ethylene is dosed via line 205 and optionally 1-butene is dosed as comonomer via line 206 and/or hydrogen is dosed via line 207. Reactor slurry is withdrawn form reactors 200 through line 203 and routed for external cooling through cooler 204 and then back to polymerization reactor 200. Reactor slurry withdrawn form reactor 200 via line 203 is further partly transferred through line 208, which may further comprise a flash vessel (not shown), to reactor 300.

The polyethylene particles contained in the slurry transferred to reactor 300 comprise still active catalyst which continues to polymerize ethylene and, if present, comonomer in reactor 300. Accordingly, ethylene is dosed via line 305 and optionally 1-butene is dosed as comonomer via line 306 and/or hydrogen is dosed via line 307. Reactor slurry is withdrawn form reactors 300 through line 303 and routed for external cooling through cooler 304 and then back to polymerization reactor 300. Reactor slurry withdrawn form reactor 300 via line 303 is further partly transferred through line 308, which may further comprise a flash vessel, cooling devices and/or other vessels (not shown), to separation device 400.

In separation device 400, the suspension medium is separated from the solid particulate polyethylene. The polyethylene is directed to a finishing section via line 401 for further processing, including without limitation hydrocarbons removal and compounding. Recycled suspension medium is directly routed back to the ethylene slurry polymerization reactors 100, 200 and/or 300 through lines 402 and 109, 209 and/or 309, with excess suspension medium being routed to holding tank 500 via line 403. Fresh diluent may also be added to the suspension medium recycle lines 109, 209 and/or 309 through line 501. The fresh diluent, preferably selected from hexane or isobutane, may either be new, unprocessed diluent or purified diluent obtained from holding tank 500 that has been processed to remove impurities. Fresh aluminum alkyl is delivered to suspension medium recycle line 109 through line 110 to polymerization reactor 100.

Before being introduced into polymerization reactors 100, 200 and 300, the ethylene is first fed via line 601 into an ethylene purification unit 600, passed through purification unit 600, and then routed via line 602 to ethylene feeding lines 105, 205 and 305.

In the process of the present disclosure, the diluent fed to the polymerization reactors of the reactor cascade can either be fresh diluent or that which has been separated from the particulate polyethylene in the reactor slurry and then directly recycled, i.e., the recycled suspension medium, or combinations thereof. The fresh diluent can either be new, unprocessed material or diluent previously separated from the reactor slurry that has been processed to remove impurities; for example, low boiling components or waxes. Generally, any combination of recycled suspension medium and fresh diluent can be fed to the polymerization reactors in the reactor cascasde. The suspension medium separated from the particulate polyethylene in the separator and consequently also the recycled suspension medium contains diluent, aluminum alkyl, and comonomers such as 1-butene, and waxes. The 1-butene is usually present at levels of 0% to 5%. The waxes are usually present in an amount from 0% to 5%. Preferably, the diluent fed to the first polymerization reactor of the reactor cascade system is fresh diluent and recycled suspension medium, optionally in combination with fresh diluent, is fed to the subsequent polymerization reactors. It is especially preferred that the diluent fed to the first polymerization reactor of the reactor cascade system is fresh diluent and the diluent fed to the subsequent polymerization reactors is recycled suspension medium.

The process of the present disclosure to produce polyethylene uses ethylene in a slurry polymerization in the presence of a catalyst, a diluent, preferably hexane or isobutane, and optionally, hydrogen and one or more comonomers. The polymerization proceeds in a suspended slurry formed from polymer particles in the diluent, unreacted monomer and catalyst. The obtained polyethylene polymers can be ethylene homopolymers or copolymers of ethylene containing up to 40 wt.% of C₃ to C₁₀ alpha-olefins. Preferably, the comonomers are chosen from 1-butene, 1-pentene, 1-hexene, 1-octene or mixtures thereof. The slurry polymerization process is at reactor temperatures from 60°C to 95°C, preferably from 65°C to 90°C, and more preferably from 70°C to 85°C, and at reactor pressures from 0.15 MPa to 3 MPa, preferably from 0.2 MPa to 2 MPa, more preferably from 0.25 MPa to 1.5 MPa.

The polyethylene polymers obtained in process of the present disclosure are preferably multimodal. For the purposes of this disclosure, the term "multimodal" means that the polymer compositions produced in the subject multi-reactor cascade system contain multiple polymer components, each component being produced in a separate reactor and differing from the other component(s) in terms of either the type and/or amount of comonomer, or molecular weight distribution. The term "multimodal" as used herein shall include also "bimodal". Preferably, the polyethylene polymers are bimodal or trimodal.

The production of multimodal polyethylene in the multi-reactor system includes polymers formed in different reactors that are mixed in the process to produce a final polymer. Catalyst and polymer flow from reactor to reactor in series. As shown in Figure 1, catalyst is fed to the first reactor in a series of slurry reactors, along with ethylene, diluent, an aluminum alkyl co-catalyst, and optionally hydrogen and monomers. The polymer exiting the first reactor results from the catalyst activity and selectivity in that reactor, which in turn is linked to the effective amount of aluminum alkyl present, the reactor temperature, pressure, and feed concentrations. However, the catalyst activity and selectivity of the catalyst in the first reactor is affected by the interaction of the catalyst, aluminum alkyl co-catalyst and poisons that may be present. If poisons enter the reactors, e.g. with the ethylene feed, they chemically react with the aluminum alkyl, so that the effective amount of the aluminum alkyl present changes. This in turn may change the activity and selectivity of the catalyst system.

In the second and subsequent reactors the same interaction occurs between impurities entering with the ethylene, active catalyst in the polymer, and aluminum alkyl co-catalyst, except that fresh aluminum alkyl is not added. Instead, the reactors receive the co-catalyst from the preceding reactor. Therefore, in multi-reactor cascade systems, while polymerization of ethylene occurs in each of the dedicated reactors to make polymers, each having its own molecular weight, the activity of the catalyst and concentration of the aluminum alkyl co-catalyst changes within each reactor, and from reactor-to-reactor. The complexity of such systems obviously increases as the number of reactors increase. Different from polyethylene grades produced in a single reactor, the polymerization product of the subject multi-reactor process is the result of at least two polymerizations that target individual polymers in each reactor to achieve a desired final product property set for the final polymer. Especially in case of preparing multimodal polyethylene compositions, for which a different polyethylene is produced in every polymerization reactor, small differences in the structure and composition of the polyethylene fractions produced in the individual polymerization reactors may result in significant differences in the product properties of the final polyethylene compositions.

Preferably, the polyethylene polymers produced by the polymerization process are high density polyethylene (HDPE) resins preferably having a density within the range of from 0.935 g/cm³ to 0.970 g/cm³. More preferably, the density is within the range of from 0.94 g/cm³ to 0.970 g/cm³. Most preferably, the density is within the range of 0.945 g/cm³ to 0.965 g/cm³. Density is measured according to DIN EN ISO 1183-1:2004, Method A (Immersion) with compression molded plaques of 2 mm thickness which were prepared with a defined thermal history: Pressed at 180°C, 20 MPa for 8 min with subsequent crystallization in boiling water for 30 min.

Preferably, the HDPE resin has a melt index (MI_{21.6}) from 1 g/10 min to 100 g/10 min, more preferably from 1.5 g/10 min to 50 g/10 min, and most preferably from 2 g/10 min to 35 g/10 min. The MI_{21.6} is measured according to DIN EN ISO 1133:2005, condition G at a temperature of 190°C under a load of 21.6 kg.

Preferably, the HDPE resin is an ethylene homopolymer or copolymer that comprises from 90 wt.% to 99.8 wt.% of recurring units of ethylene and from 0.2 wt.% to 10 wt.% of recurring units of a C₃ to C₁₀ alpha-olefin. The C₃ to C₁₀ α-olefins preferably include propylene, 1-butene, 1-pentene, 1-hexene, 4-methyl-1-pentene, and 1-octene, and mixtures thereof.

The polyethylene polymers produced by the polymerization process are especially suitable for preparing films, pipes or small blow molding or large blow molding polyethylene articles. Accordingly, the present disclosure also provides processes for preparing films, pipes or small blow molding or large blow molding polyethylene articles, in which a polyethylene is prepared by a process according to the process of the present disclosure and the polyethylene is then converted to a film, pipe or small blow molding or large blow molding polyethylene article.

The polymerization is preferably carried out using Ziegler catalysts, i.e. catalysts of the Ziegler type which are at times also designated as Ziegler-Natta catalysts, comprising a compound of titanium or vanadium, a compound of magnesium and optionally a particulate inorganic oxide as support.

The titanium compounds are preferably selected from the halides or alkoxides of trivalent or tetravalent titanium, with titanium alkoxy halogen compounds or mixtures of various titanium compounds. Examples of suitable titanium compounds are TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₉)Cl₃, Ti(OC₂H₅)Br₃, Ti(O-n-C₄H₉)Br₃, Ti(OCH₃)₂Cl₂, Ti(OC₂H₅)₂Cl₂, Ti(O-n-C₄H₉)₂Cl₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ or Ti(O-n-C₄H₉)₄. Preference is given to using titanium compounds which comprise chlorine as the halogen. Preference is likewise given to titanium halides which comprise only halogen in addition to titanium, and among these especially titanium chlorides and in particular, titanium tetrachloride. Among the vanadium compounds, preferable are the vanadium halides, the vanadium oxyhalides, the vanadium alkoxides and the vanadium acetylacetonates. Preference is given to vanadium compounds in the oxidation states 3 to 5.

In the production of the solid component, preferably at least one compound of magnesium is used. Suitable compounds of this type are halogen-comprising magnesium compounds such as magnesium halides, and in particular the chlorides or bromides; and magnesium compounds from which the magnesium halides can be obtained in a customary way, e.g. by reaction with halogenating agents. Preferably, the halogens are chlorine, bromine, iodine or fluorine or mixtures of two or more of the halogens. More preferably, the halogens are chlorine or bromine. Most preferably, the halogens are chlorine.

Possible halogen-containing magnesium compounds are magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Suitable halogenating agents are, for example, halogens, hydrogen halides, SiCl₄ or CCl₄ Preferably chlorine or hydrogen chloride is the halogenating agent.

Examples of suitable, halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyloxymagnesium, diamyloxymagnesium, n-butyloxyethoxymagnesium, n-butyloxy-sec-butyloxymagnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amylmagnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alkyl)magnesium compounds. Preferably, the Ziegler catalyst comprises a transition metal selected from titanium, zirconium, vanadium, and chromium.

The Ziegler catalyst is preferably added to the slurry reactor by first mixing the catalyst with the diluent used, such as hexane, in a mixing tank to form a slurry suitable for pumping. Preferably, the concentration of catalyst in the catalyst slurry pumped to the slurry polymerization reactor is from 10 mmol/l to 150 mmol/l, with respect to the titanium content of the catalysts compound. Preferably, a positive displacement pump, such as a membrane pump is used to transfer the catalyst slurry to the slurry polymerization reactor.

Catalysts of the Ziegler type are polymerized in the presence of aluminum alkyl co-catalyst activators. The aluminum alkyls are preferably selected from trialkylaluminum compounds. More preferably, the aluminum alkyls are trimethylaluminum (TMA), triethylaluminum (TEAL), tri-isobutylaluminum (TIBAL), isoprenylaluminum (IPRA), or tri-n-hexylaluminum (TNHAL). Most preferably, the aluminum alkyl is TEAL.

Fresh aluminum alkyl can be added to the slurry reactor as such. Preferably, the aluminum alkyl is added by first mixing the aluminum alkyl with the diluent used, such as hexane, in a mixing tank. Preferably, the concentration of aluminum alkyl in the solution pumped to the slurry polymerization reactor is from 50 mmol/l to 600 mmol/l. Preferably, a positive displacement pump, such as a membrane pump is used to transfer the aluminum alkyl to the slurry polymerization reactor.

The aluminum alkyls fed to the polymerization reactor are partially consumed in the ethylene polymerization reactions, where as discussed above the aluminum alkyl co-catalyst activates the Ti or V sites on the catalyst, or which can be partially deactivated by reaction with the oxygen-containing polar compounds that enter the slurry polymerization reactor with the ethylene or other feed streams like hexane, 1-butene and hydrogen. The oxygen in these impurities chemically combines with the aluminum alkyl, thereby interfering with the ethylene polymerization reactivity of the co-catalyst in the slurry polymerization reactor. Thus, the concentration of aluminum alkyl in the recycled suspension medium is lower than what would be expected from fresh aluminum alkyls of the same type and concentration, with the difference being a result of the consumption of aluminum alkyl due to reactions with the catalyst, and the deactivation caused by reaction with impurities of feed streams.

The ethylene for use in the ethylene slurry polymerization process is first passed through an ethylene purification unit before being fed to the two or more polymerization reactors of the reactor cascade. As all technically used feed streams, also the ethylene employed for polymerization reactions contains impurities. The ethylene stream usually contains a number of impurities. Depending on the source of the ethylene, the quality of the ethylene feed stream supplied to the polymerization process prior to purification can vary in amount and composition of the impurities. Further, the quality can also vary with time; this can occur for example by a change of the ethylene source or by fluctuations in the ethylene production process.

Typical ethylene impurities are oxygen-containing polar molecules or acetylene. Such oxygen-containing polar molecules include water, alcohols, glycols, phenols, ethers, carbonyl compounds such as ketones, aldehydes, carboxylic acids, esters, fatty acids, and sulfur dioxides and trioxides, and carbonyl sulfide.

Common impurities in polymerization grade ethylene are carbon monoxide, typically in a range of 0.1 to 2 ppm or more; carbon dioxide, typically in a range of 0.5 to 3 ppm or more; oxygen, typically in a range of 0.2 to 2 ppm or more; acetylene, typically in a range of 0.5 to 5 ppm or more; and water, typically in a range of 0.5 to 5 ppm or more, based on the ethylene stream and expresses as ppm by volume.

The ethylene stream may also contain secondary impurities selected from COS, H₂S, CS₂; polar organic compounds such as oxygenated hydrocarbons including alcohols, aldehydes, ketones, ethers, peroxides, and glycols; mercaptans; and nitrogen-based molecules such as ammonia, amines or nitrites; or mixtures thereof. The secondary impurities can be present in an amount from 0.01 to 10 ppm by volume, based on the ethylene stream.

By passing the ethylene through an ethylene purification unit, not only the total quantity of impurities in the ethylene feed stream is reduced but it is also ensured that the level of impurities dosed to the polymerization keeps constant. This provides stable polymerization conditions and especially avoids uncontrolled variation of aluminum alkyl concentration resulting in uncontrolled variation of catalyst sensitivity especially in polymerizations reactors of the reactor cascade to which no fresh aluminum alkyl is directly dosed

In a preferred embodiment of the present invention, the ethylene feed stream is purified in sequential purification steps. More preferably the ethylene purification unit comprises four process steps through which the ethylene flows sequentially prior to entering the reactors. The first process step is preferably the reaction of impurities in the ethylene stream with an oxygen-reduction catalyst. The oxygen-reduction catalyst may be selected from CuO, or alumina-based catalysts of nickel, palladium or platinum. Preferably, the oxygen-reduction catalyst is CuO. In this step, oxygen reacts with the oxygen-reduction catalyst so that the oxygen is captured by the catalyst. Hydrogen is preferably also used in the first process step to hydrogenate acetylene to ethylene or ethane in the presence of the oxygen-reducing catalyst. The hydrogen flow also maintains the CuO catalyst in a reduced state. The first process step preferably takes place in a column which is usually a closed vessel constructed of materials consistent with the temperature and pressure of the ethylene stream and is arranged to house the oxygen-reduction catalyst and distribute flow of the ethylene stream so as to achieve good contact with the oxygen-reduction catalyst. The ethylene stream becomes depleted in oxygen and acetylene concentration as it progresses through the first column. It then exits the first column as the first process step product stream and enters the second process step.

The second process step is preferably the reaction of impurities in the ethylene stream with a carbon monoxide-reduction catalyst which oxidizes CO to CO₂. The carbon monoxide-reduction catalyst may be selected from CuO₂, copper chromite, Au/CeO₂ or oxides of Pt, Pd, Ag, V, Cr, Mn, Fe, Co, or Ni, optionally supported on alumina. Preferably, the carbon monoxide-reduction catalyst is CuO₂. The second process step takes preferably place in a second column which is usually a closed vessel constructed of materials consistent with the temperature and pressure of the first process step product stream, and is arranged to house the carbon monoxide-reduction catalyst and distribute flow of the first process step product stream so as to achieve good contact with the carbon monoxide-reduction catalyst. The first process step product stream becomes depleted in carbon monoxide concentration as it progresses through the second column. It then exits the second process step as the second process step product stream and enters the third process step. When the carbon monoxide-reduction catalyst is CuO₂, the oxidation reactions catalyzed by CuO₂ will progressively convert the CuO₂ catalyst to CuO. Thus, periodically, the CuO₂ catalyst in the second column must be regenerated with oxygen.

The third process step preferably reduces water and CO₂, including the CO₂ produced in the second process step by contacting the ethylene stream with a water-reduction catalyst that is preferably selected from molecular sieves. Molecular sieves are synthetically-produced zeolites, a crystalline form of alkali metal aluminosilicates, and have high structural consistency. They can be activated to obtain adsorbent properties by eliminating their hydration water. The resulting material is highly porous with a strong affinity for water, specific gases and liquids. Molecular sieves are generally classified as desiccant types 3A, 4A, 5A or 13X, which differentiate the molecular sieves according to their particular zeolite (potassium-, sodium- or calcium-based) and pore diameter. The different classifications also correspond to molecular sieves suitable for the adsorption of particular compounds, and having particular performance characteristics. In the third process step, preferably both water and CO₂ react with the molecular sieve, where the water and CO₂ are adsorbed by the molecular sieve. The third process step preferably takes place in a third column which is usually a closed vessel constructed of materials consistent with the temperature and pressure of the third process step product stream, and is arranged to house the water-reduction catalyst and distribute flow of the third process step product stream so as to achieve good contact with the water-reduction catalyst. The second process product stream becomes depleted in water concentration and carbon dioxide concentration as it progresses through the third column. It then exits the third process step as the third process step product stream and enters the fourth process step.

In the fourth process step the ethylene stream is preferably contacted with at least one activated alumina catalyst. Activated aluminas are synthetically produced amorphous oxides from aluminum trihydrate, having high absorption capabilities. Activated alumina's are preferably used to reduce the concentrations of secondary impurities such as COS, H₂S, CS₂; polar organic compounds such as oxygenated hydrocarbons including alcohols, aldehydes, ketones, ethers, peroxides, glycols; mercaptans; and nitrogen-based molecules such as ammonia, amines, nitrites or mixtures thereof. In the fourth process step, the secondary impurities are a preferably dsorbed onto the active alumina. The fourth process step preferably takes place in a fourth column which is usually a closed vessel constructed of materials consistent with the temperature and pressure of the third process step product stream, and is arranged to house the activated alumina catalyst and distribute flow of the third process step product stream so as to achieve good contact with the activated alumina catalyst. The third process step product stream becomes depleted in secondary impurities as it progresses through the fourth column. It exits the fourth process step as the fourth step product stream, and enters a reactor. Activated aluminas suitable for use in the fourth process step include Selexsorb® CD, Selexsorb® AS and Selexsorb® COS, commercially available from BASF.

The ethylene stream exiting the fourth process step and entering the reactor has preferably a carbon monoxide concentration of at most 0.09 ppm by volume, preferably at most 0.06 ppm by volume, more preferably at most 0.03 ppm by volume; a carbon dioxide concentration of at most 0.9 ppm by volume, preferably at most 0.5 ppm by volume, more preferably at most 0.1 ppm by volume; an oxygen concentration of at most 0.9 ppm by volume, preferably at most 0.5 ppm by volume, more preferably at most 0.1 ppm by volume; an acetylene concentration of at most 2.7 ppm by volume, preferably at most 1.8 ppm by volume, and more preferably at most 1.0 ppm by volume; and a water concentration of at most 1.8 ppm by volume, preferably at most 1.0 ppm by volume, more preferably at most 0.1 ppm by volume.

In a preferred embodiment of the present disclosure not only the ethylene feed stream to the cascade of polymerization reactors is passed through an ethylene purification unit but also the C₃ to C₁₀ alpha-olefins, which are fed as comonomer to at least one of the polymerization rectors are first passed through an olefin purification unit, which reduces at least the concentration of carbon monoxide, carbon dioxide, oxygen, acetylene and water contained in the olefins, before being fed to the two or more polymerization reactors of the reactor cascade.

Passing the ethylene stream fed to the multi-reactor process through a purification unit not only reduces the amount of impurities but also ensures that the quality of the ethylene stream is stable and does not vary over time.

The structure and composition of the polyethylene exiting the first polymerization is a result of the catalyst activity and selectivity in that reactor, which in turn is linked to the effective amount of aluminum alkyl present, the reactor temperature, the reactor pressure, and the feed concentrations. However, the catalyst activity and selectivity of the catalyst in the first reactor is affected by the interaction of the catalyst, aluminum alkyl co-catalyst and poisons that may be present. Poisons can enter the reactors with the ethylene feed and chemically react with the aluminum alkyl, so that the effective amount of the aluminum alkyl present also changes. This in turn changes the activity and selectivity of the catalyst system.

Operating multiple slurry reactors in series in a way that aluminum alkyl is fed to only the first polymerization rector of the cascade but purified ethylene is used as monomer in the polymerization allows preparing polyethylene compositions having good product property combinations with constant quality.

Other features, advantages and embodiments of the subject matter of the present disclosure disclosed herein will be readily apparent to those exercising ordinary skill after reading the foregoing disclosure. In this regard, while specific embodiments of the subject matter of the present disclosure have been described in considerable detail, variations and modifications of these embodiments can be effected without departing from the spirit and scope of the disclosure as described and claimed.

## Claims

1. A slurry polymerization process for the preparation of polyethylene in a reactor cascade of two or more polymerization reactors comprising the steps of:
a) feeding to a polymerization reactor amounts of ethylene, of a Ziegler catalyst, of fresh aluminum alkyl and of a diluent and optionally amounts of hydrogen and optionally amounts of one or more C₃ to C₁₀ alpha-olefins;
b) contacting in the polymerization reactor at a reactor temperature from 60°C to 95°C and a reactor pressure from 0.15 MPa to 3 MPa, the amounts of the ethylene, the Ziegler catalyst, the fresh aluminum alkyl, the diluent and optionally the hydrogen and the C₃ to C₁₀ alpha-olefins, thereby forming a slurry product comprising particulate polyethylene and a suspension medium;
c) withdrawing the slurry product from the polymerization reactor;
d) feeding the slurry product to a second polymerization reactor of the reactor cascade,
e) feeding to the second polymerization reactor additional amounts of ethylene, of diluent and optionally additional amounts of hydrogen and of C₃ to C₁₀ alpha-olefins;
f) contacting in the second polymerization reactor at a reactor temperature from 60°C to 95°C and a reactor pressure from 0.15 MPa to 3 MPa, the slurry product fed to the second polymerization reactor and the additional amounts of ethylene, diluent, and optionally hydrogen and C₃ to C₁₀ alpha-olefins, thereby forming an additional amount of polyethylene in the slurry product;
g) and withdrawing the slurry product from the second polymerization reactor,
wherein the ethylene is first passed through an ethylene purification unit, which reduces at least the concentration of carbon monoxide, carbon dioxide, oxygen, acetylene and water contained in the ethylene, before it is fed to the two or more polymerization reactors of the reactor cascade.

2. The process of claim 1, further comprising the steps of:
h) feeding the slurry product withdrawn from the second polymerization reactor to a third polymerization reactor of the reactor cascade,
i) feeding to the third polymerization reactor additional amounts of ethylene, of diluent, and optionally additional amounts of hydrogen and of C₃ to C₁₀ alpha-olefins;
j) contacting in the third polymerization reactor at a reactor temperature from 60°C to 95°C and a reactor pressure from 0.15 MPa to 3 MPa the slurry product fed to the third polymerization reactor and the additional amounts of ethylene, diluent, and optionally hydrogen and C₃ to C₁₀ alpha-olefins, thereby forming an additional amount of polyethylene in the slurry product;
k) and withdrawing the slurry product from the third polymerization reactor.

3. The process of claim 1 or 2, further comprising the steps of:
1) feeding the slurry product withdrawn in step g) or k) to a post reactor,
m) maintaining the slurry product in the post reactor at a reactor temperature from 60°C to 95°C and a reactor pressure from 0.15 MPa to 3 MPa, thereby forming an additional amount of polyethylene in the slurry product;
n) and withdrawing the slurry product from the post reactor.

4. The process of any of claims 1 to 3, wherein the ethylene fed to the polymerization reactors has a carbon monoxide concentration of at most 0.09 ppm by volume.

5. The process of any of claims 1 to 4, wherein the ethylene fed to the polymerization reactors has a carbon dioxide concentration of at most 0.9 ppm by volume.

6. The process of any of claims 1 to 5, wherein the ethylene fed to the polymerization reactors has an oxygen concentration of at most 0.9 ppm by volume.

7. The process of any of claims 1 to 6, wherein the ethylene fed to the polymerization reactors has an acetylene concentration of at most 2.7 ppm by volume.

8. The process of any of claims 1 to 7, wherein the ethylene fed to the polymerization reactors has a water concentration of at most 1.8 ppm by volume.

9. The process of any of claims 1 to 8, wherein the ethylene purification comprises a first process step comprising contacting the ethylene with a catalyst reducing the concentration of oxygen in the ethylene, a second process step comprising contacting the ethylene with a catalyst reducing the concentration of carbon monoxide in the ethylene, a third process step comprising contacting the ethylene with a molecular sieves and a fourth process step comprising contacting the ethylene with an activated alumina.

10. The process of any of claims 1 to 9, wherein one or more C₃ to C₁₀ alpha-olefins are fed to at least one of the polymerization rectors and the C₃ to C₁₀ alpha-olefins are first passed through an olefin purification unit, which reduces at least the concentration of carbon monoxide, carbon dioxide, oxygen, acetylene and water contained in the olefins, before being fed to the two or more polymerization reactors of the reactor cascade.

11. The process of any of claims 1 to 10, wherein the aluminum alkyl is trimethylaluminum, triethylaluminum, tri-isobutylaluminum, isoprenylaluminum, or tri-n-hexylaluminum.

12. The process of any of claims 1 to 11, wherein the diluent fed to the first reactor of the reactor cascade is fresh diluent.

13. The process of any of claims 1 to 12, wherein the prepared polyethylene has a density in the range of from 0.935 g/cm³ to 0.970 g/cm³.

14. The process of any of claims 1 to 13, wherein the prepared polyethylene is a bimodal or multimodal polyethylene.

15. A process for preparing films, pipes or small blow molding or large blow molding polyethylene articles, in which a polyethylene is prepared by the process of any of claims 1 to 14 and the polyethylene is then converted to a film, pipe or small blow molding or large blow molding polyethylene article.

## Patentansprüche

1. Suspensionspolymerisationsverfahren zur Herstellung von Polyethylen in einer Reaktorkaskade aus zwei oder mehr Polymerisationsreaktoren, umfassend die Schritte:
a) Einspeisen von Mengen an Ethylen, einem Ziegler-Katalysator, frischem Aluminiumalkyl und einem Verdünnungsmittel und gegebenenfalls Mengen an Wasserstoff und gegebenenfalls Mengen an einem oder mehreren C₃- bis C₁₀-alpha-Olefinen in einen Polymerisationsreaktor;
b) Kontaktieren der Mengen von dem Ethylen, dem Ziegler-Katalysator, dem frischen Aluminiumalkyl, dem Verdünnungsmittel und gegebenenfalls dem Wasserstoff und den C₃- bis C₁₀-alpha-Olefinen in dem Polymerisationsreaktor bei einer Reaktortemperatur von 60 °C bis 95 °C und einem Reaktordruck von 0,15 MPa bis 3 MPa, wodurch ein Suspensionsprodukt gebildet wird, welches teilchenförmiges Polyethylen und ein Suspensionsmedium umfasst;
c) Abziehen des Suspensionsprodukts von dem Polymerisationsreaktor;
d) Einspeisen des Suspensionsprodukts in einen zweiten Polymerisationsreaktor der Reaktorkaskade,
e) Einspeisen von zusätzlichen Mengen an Ethylen, Verdünnungsmittel und gegebenenfalls zusätzlichen Mengen an Wasserstoff und C₃- bis C₁₀-alpha-Olefinen in den zweiten Polymerisationsreaktor;
f) Kontaktieren des in den zweiten Polymerisationsreaktor eingespeisten Suspensionsprodukts und der zusätzlichen Mengen an Ethylen, Verdünnungsmittel und gegebenenfalls Wasserstoff und C₃- bis C₁₀-alpha-Olefinen in dem zweiten Polymerisationsreaktor bei einer Reaktortemperatur von 60 °C bis 95 °C und einem Reaktordruck von 0,15 MPa bis 3 MPa, wodurch eine zusätzliche Menge an Polyethylen in dem Suspensionsprodukt gebildet wird;
g) und Abziehen des Suspensionsprodukts aus dem zweiten Polymerisationsreaktor, wobei das Ethylen zuerst durch eine Ethylenreinigungseinheit geführt wird, die mindestens die Konzentration an Kohlenmonoxid, Kohlendioxid, Sauerstoff, Acetylen und Wasser reduziert, die in dem Ethylen enthalten waren, bevor es in die zwei oder mehr Polymerisationsreaktoren der Reaktorkaskade eingespeist wird.

2. Verfahren nach Anspruch 1, ferner umfassend die folgenden Schritte:
h) Einspeisen des aus dem zweiten Polymerisationsreaktor abgezogenen Suspensionsprodukts in einen dritten Polymerisationsreaktor der Reaktorkaskade,
i) Einspeisen von zusätzlichen Mengen an Ethylen, Verdünnungsmittel und gegebenenfalls zusätzlichen Mengen an Wasserstoff und C₃- bis C₁₀-alpha-Olefinen in den dritten Polymerisationsreaktor;
j) Kontaktieren des in den dritten Polymerisationsreaktor eingespeisten Suspensionsprodukts und der zusätzlichen Mengen an Ethylen, Verdünnungsmittel und gegebenenfalls Wasserstoff und C₃- bis C₁₀-alpha-Olefinen in dem dritten Polymerisationsreaktor bei einer Reaktortemperatur von 60 °C bis 95 °C und einem Reaktordruck von 0,15 MPa bis 3 MPa, wodurch eine zusätzliche Menge an Polyethylen in dem Suspensionsprodukt gebildet wird;
k) und Abziehen des Suspensionsprodukts aus dem dritten Polymerisationsreaktor.

3. Verfahren nach Anspruch 1 oder 2, ferner umfassend die folgenden Schritte:
1) Einspeisen des in Schritt g) oder k) abgezogenen Suspensionsprodukts in einen Nachreaktor,
m) Halten des Suspensionsprodukts in dem Nachreaktor auf einer Reaktortemperatur von 60 °C bis 95 °C und einem Reaktordruck von 0,15 MPa bis 3 MPa, wodurch eine zusätzliche Menge an Polyethylen in dem Suspensionsprodukt gebildet wird;
n) und Abziehen des Suspensionsprodukts aus dem Nachreaktor.

4. Verfahren nach einem der Ansprüche 1 bis 3, wobei das in die Polymerisationsreaktoren eingespeiste Ethylen eine Kohlenmonoxidkonzentration von höchstens 0,09 Volumen-ppm aufweist.

5. Verfahren nach einem der Ansprüche 1 bis 4, wobei das in die Polymerisationsreaktoren eingespeiste Ethylen eine Kohlendioxidkonzentration von höchstens 0,9 Volumen-ppm aufweist.

6. Verfahren nach einem der Ansprüche 1 bis 5, wobei das in die Polymerisationsreaktoren eingespeiste Ethylen eine Sauerstoffkonzentration von höchstens 0,9 Volumen-ppm aufweist.

7. Verfahren nach einem der Ansprüche 1 bis 6, wobei das in die Polymerisationsreaktoren eingespeiste Ethylen eine Acetylenkonzentration von höchstens 2,7 Volumen-ppm aufweist.

8. Verfahren nach einem der Ansprüche 1 bis 7, wobei das in die Polymerisationsreaktoren eingespeiste Ethylen eine Wasserkonzentration von höchstens 1,8 Volumen-ppm aufweist.

9. Verfahren nach einem der Ansprüche 1 bis 8, wobei die Ethylenreinigung einen ersten Verfahrensschritt, der Kontaktieren des Ethylens mit einem Katalysator umfasst, wodurch die Konzentration an Sauerstoff in dem Ethylen reduziert wird, einen zweiten Verfahrensschritt, der Kontaktieren des Ethylens mit einem Katalysator umfasst, wodurch die Konzentration an Kohlenmonoxid in dem Ethylen reduziert wird, einen dritten Verfahrensschritt, der Kontaktieren des Ethylens mit Molekularsieben umfasst, und einen vierten Verfahrensschritt umfasst, der Kontaktieren des Ethylens mit aktiviertem Aluminiumoxid umfasst.

10. Verfahren nach einem der Ansprüche 1 bis 9, wobei ein oder mehrere C₃- bis C₁₀-alpha-Olefine in mindestens einen der Polymerisationsreaktoren eingespeist werden und die C₃- bis C₁₀-alpha-Olefine zuerst durch eine Olefinreinigungseinheit geleitet werden, die mindestens die Konzentration an Kohlenmonoxid, Kohlendioxid, Sauerstoff, Acetylen und Wasser reduziert, die in den Olefinen enthalten sind, bevor sie in die zwei oder mehr Polymerisationsreaktoren der Reaktorkaskade eingespeist werden.

11. Verfahren nach einem der Ansprüche 1 bis 10, wobei das Aluminiumalkyl Trimethylaluminium, Triethylaluminium, Triisobutylaluminium, Isoprenylaluminium oder Tri-n-hexylaluminium ist.

12. Verfahren nach einem der Ansprüche 1 bis 11, wobei das in den ersten Reaktor der Reaktorkaskade eingespeiste Verdünnungsmittel frisches Verdünnungsmittel ist.

13. Verfahren nach einem der Ansprüche 1 bis 12, wobei das hergestellte Polyethylen eine Dichte im Bereich von 0,935 g/cm³ bis 0,970 g/cm³ hat.

14. Verfahren nach einem der Ansprüche 1 bis 13, wobei das hergestellte Polyethylen ein bimodales oder multimodales Polyethylen ist.

15. Verfahren zur Herstellung von Folien, Rohren oder Polyethylen-Kleinhohlkörpern oder Großhohlkörpern, wobei ein Polyethylen nach dem Verfahren gemäß einem der Ansprüche 1 bis 14 hergestellt wird und das Polyethylen dann in eine Folie, ein Rohr oder einen Polyethylen-Kleinhohlkörper oder Großhohlkörper umgewandelt wird.

## Revendications

1. Procédé de polymérisation en suspension pour la préparation de polyéthylène dans une cascade de réacteurs de deux réacteurs de polymérisation ou plus, comprenant les étapes de :
a) introduction, dans un réacteur de polymérisation, de quantités d'éthylène, d'un catalyseur de Ziegler, d'alkylaluminium frais et d'un diluant et éventuellement de quantités d'hydrogène et éventuellement de quantités d'une ou de plusieurs alpha-oléfines en C₃ à C₁₀ ;
b) mise en contact, dans le réacteur de polymérisation, à une température de réacteur de 60 °C à 95 °C et à une pression de réacteur de 0,15 MPa à 3 MPa, des quantités d'éthylène, de catalyseur de Ziegler, d'alkylaluminium frais, de diluant et éventuellement d'hydrogène et d'alpha-oléfines en C₃ à C₁₀, ce qui permet de former un produit de type suspension, comprenant du polyéthylène particulaire et un milieu de mise en suspension ;
c) retrait du produit de type suspension du réacteur de polymérisation ;
d) introduction du produit de type suspension dans un deuxième réacteur de polymérisation de la cascade de réacteurs,
e) introduction, dans le deuxième réacteur de polymérisation, de quantités supplémentaires d'éthylène, de diluant et éventuellement de quantités supplémentaires d'hydrogène et d'alpha-oléfines en C₃ à C₁₀ ;
f) mise en contact, dans le deuxième réacteur de polymérisation, à une température de réacteur de 60 °C à 95 °C et à une pression de réacteur de 0,15 MPa à 3 MPa, du produit de type suspension introduit dans le deuxième réacteur de polymérisation et des quantités supplémentaires d'éthylène, de diluant et éventuellement d'hydrogène et d'alpha-oléfines en C₃ à C₁₀, ce qui permet de former une quantité supplémentaire de polyéthylène dans le produit de type suspension ;
g) et retrait du produit de type suspension du deuxième réacteur de polymérisation, l'éthylène étant tout d'abord passé à travers une unité de purification d'éthylène, ce qui réduit au moins la concentration en monoxyde de carbone, en dioxyde de carbone, en oxygène, en acétylène et en eau contenue dans l'éthylène, avant d'être introduit dans les deux réacteurs de polymérisation ou plus de la cascade de réacteurs.

2. Procédé selon la revendication 1, comprenant en outre les étapes de :
h) introduction du produit de type suspension retiré du deuxième réacteur de polymérisation dans un troisième réacteur de polymérisation de la cascade de réacteurs,
i) introduction, dans le troisième réacteur de polymérisation, de quantités supplémentaires d'éthylène, de diluant et éventuellement de quantités supplémentaires d'hydrogène et d'alpha-oléfines en C₃ à C₁₀ ;
j) mise en contact, dans le troisième réacteur de polymérisation, à une température de réacteur de 60 °C à 95 °C et à une pression de réacteur de 0,15 MPa à 3 MPa, du produit de type suspension introduit dans le troisième réacteur de polymérisation et des quantités supplémentaires d'éthylène, de diluant et éventuellement d'hydrogène et d'alpha-oléfines en C₃ à C₁₀, ce qui permet de former une quantité supplémentaire de polyéthylène dans le produit de type suspension ;
k) retrait du produit de type suspension du troisième réacteur de polymérisation.

3. Procédé selon la revendication 1 ou 2, comprenant en outre les étapes de :
1) introduction du produit de type suspension retiré à l'étape g) ou k) dans un post-réacteur,
m) maintien du produit de type suspension dans le post-réacteur à une température de réacteur de 60 °C à 95 °C et à une pression de réacteur de 0,15 MPa à 3 MPa, ce qui permet de former une quantité supplémentaire de polyéthylène dans le produit de type suspension ;
n) et retrait du produit de type suspension du post-réacteur.

4. Procédé selon l'une quelconque des revendications 1 à 3, l'éthylène introduit dans les réacteurs de polymérisation présentant une concentration en monoxyde de carbone d'au plus 0,09 ppm en volume.

5. Procédé selon l'une quelconque des revendications 1 à 4, l'éthylène introduit dans les réacteurs de polymérisation présentant une concentration en dioxyde de carbone d'au plus 0,9 ppm en volume.

6. Procédé selon l'une quelconque des revendications 1 à 5, l'éthylène introduit dans les réacteurs de polymérisation présentant une concentration en oxygène d'au plus 0,9 ppm en volume.

7. Procédé selon l'une quelconque des revendications 1 à 6, l'éthylène introduit dans les réacteurs de polymérisation présentant une concentration en acétylène d'au plus 2,7 ppm en volume.

8. Procédé selon l'une quelconque des revendications 1 à 7, l'éthylène introduit dans les réacteurs de polymérisation présentant une concentration en eau d'au plus 1,8 ppm en volume.

9. Procédé selon l'une quelconque des revendications 1 à 8, la purification de l'éthylène comprenant une première étape de traitement comprenant la mise en contact de l'éthylène avec un catalyseur réduisant la concentration en oxygène dans l'éthylène, une deuxième étape de traitement comprenant la mise en contact de l'éthylène avec un catalyseur réduisant la concentration en monoxyde de carbone dans l'éthylène, une troisième étape de traitement comprenant la mise en contact de l'éthylène avec des tamis moléculaires et une quatrième étape de traitement comprenant la mise en contact de l'éthylène avec une alumine activée.

10. Procédé selon l'une quelconque des revendications 1 à 9, une ou plusieurs alpha-oléfines en C₃ à C₁₀ étant introduites dans au moins l'un des réacteurs de polymérisation et les alpha-oléfines en C₃ à C₁₀ étant d'abord passées à travers une unité de purification d'oléfine, qui réduit au moins la concentration en monoxyde de carbone, en dioxyde de carbone, en oxygène, en acétylène et en eau contenue dans les oléfines, avant d'être introduites dans les deux réacteurs de polymérisation ou plus de la cascade de réacteurs.

11. Procédé selon l'une quelconque des revendications 1 à 10, l'alkylaluminium étant le triméthylaluminium, le triéthylaluminium, le tri-isobutylaluminium, l'isoprénylaluminium ou le tri-n-hexylaluminium.

12. Procédé selon l'une quelconque des revendications 1 à 11, le diluant introduit dans le premier réacteur de la cascade de réacteurs étant un diluant frais.

13. Procédé selon l'une quelconque des revendications 1 à 12, le polyéthylène préparé présentant une densité dans la plage de 0,935 g/cm³ à 0,970 g/cm³.

14. Procédé selon l'une quelconque des revendications 1 à 13, le polyéthylène préparé étant un polyéthylène bimodal ou multimodal.

15. Procédé de préparation de films, de tuyaux ou de petits ou de grands articles en polyéthylène moulés par soufflage, dans lequel un polyéthylène est préparé par le procédé selon l'une quelconque des revendications 1 à 14 et le polyéthylène est ensuite converti en un film, un tuyau ou en un petit ou en un grand article en polyéthylène moulé par soufflage.
